# FASCICULE DE BREVET EUROPEEN

(11) **EP 0 814 450 B1**
(45) Date de publication et mention de la délivrance du brevet: **12.09.2001**
(21) Numéro de dépôt: 97440051.7
(22) Date de dépôt: 18.06.1997
(51) Int. Cl.: G09B 15/00

(54) **Ensemble pour le déchiffrage de partitions et d'aide à l'apprentissage et à la pratique d'un instrument de musique polyphonique**
Vorrichtung zur Entschlüsselung einer Partitur und Hilfsmittel zum Erlernen und Ueben des Spielens eines mehrstimmigen Musikinstrumentes
Device for deciphering a score and teaching aid for learning and practising the playing of a poliphonic musical instrument

(30) Priorité: 18.06.1996 FR 9607717
(43) Date de publication de la demande: 29.12.1997
(73) Titulaire: Solowiow, Victor, 67140 Barr (FR)
(72) Inventeur: Solowiow, Victor, 67140 Barr (FR)
(74) Mandataire: Nuss, Pierre

(56) Documents cités:
- EP-A- 0 080 400
- WO-A-84/01845
- US-A- 3 668 967
- US-A- 5 386 757

## Description

La présente invention concerne le domaine de la pratique de la musique, plus particulièrement l'apprentissage d'un instrument polyphonique et le déchiffrage et la préparation de partitions avant leur exécution, et a pour objet un ensemble d'aide au déchiffrage de partitions et à l'apprentissage ou à la pratique d'un instrument polyphonique, ainsi qu'un procédé de déchiffrage, de préparation et d'annotation d'une partition mettant en oeuvre cet ensemble.

On connaît déjà différents dispositifs, notamment sous la forme d'un support imprimé glissant dans un manchon ajouré, permettant un déchiffrage des notes d'une partition, indiquant la décomposition des accords en notes élémentaires et/ou montrant les différentes harmoniques possibles d'une note de base donnée.

Toutefois, ces dispositifs connus, du type de ceux décrits dans le document FR-A-2 485 236 et dans le document US-A-3 791 254, se limitent à la théorie de la musique et à la fourniture d'informations musicales abstraites et ne permettent pas d'obtenir des informations utilisables directement pour la pratique d'un instrument polyphonique spécifique.

Les dispositifs connus n'indiquent pas non plus les différentes possibilités de réalisation d'un accord donné sur l'instrument considéré, afin de choisir la plus aisée à exécuter.

Enfin, ces dispositifs nécessitent l'apposition d'annotations manuscrites sur les partitions, pouvant aboutir à un travail relativement fastidieux et à une détérioration irrémédiable des feuilles de partitions.

De plus, les inscriptions ou annotations manuscrites ne peuvent souvent être comprises à la lecture que par leur auteur.

La présente invention a notamment pour but de pallier les inconvénients précités.

A cet effet, elle a pour objet un ensemble pour le déchiffrage de partitions et d'aide à l'apprentissage et à la pratique d'un instrument de musique polyphonique, caractérisé en ce qu'il est principalement constitué, d'une part, par deux éléments plans coopérants, dont le premier, extérieur et en forme de manchon plat, présente, sur l'une au moins de ses faces latérales, une série de fenêtres associées, chacune, à un pictogramme représentant, au moins schématiquement, les positions d'appui locales des doigts du joueur sur les ou une partie des organes de commande de l'instrument concerné pour la réalisation d'une note ou d'un accord donné et dont le second, intérieur et sous forme de support plan, peut coulisser avec guidage dans le manchon plat formant le premier élément et porte, répartis sur sa surface, une pluralité d'ensembles de groupes de données composés chacun d'un accord ou d'une note et, le cas échéant, d'un positionnement correspondant de la main du joueur sur l'instrument, les groupes de données d'un même ensemble étant disposés de telle manière qu'ils apparaissent tous simultanément au niveau des fenêtres du manchon plat lorsque les deux éléments plans coopérants sont situés dans une position relative adaptée, l'un par rapport à l'autre, et, d'autre part. par une pluralité d'étiquettes portant, chacune, une association déterminée d'un pictogramme et d'un groupe de données faisant partie des associations possibles d'un pictogramme du premier élément et d'un groupe de données du second élément, générées lors du coulissement relatif des deux éléments plans coopérants, lesdites étiquettes pouvant être fixées, au moins temporairement, sur des feuilles de partitions musicales ou analogues.

L'invention sera mieux comprise, grâce à la description ci-après, qui se rapporte à un mode de réalisation préféré, donné à titre d'exemple non limitatif. et expliqué avec référence aux dessins schématiques annexés, dans lesquels :
la figure 1 est une vue en élévation plane des deux éléments plans coopérants faisant partie de l'ensemble selon l'invention ;
la figure 2 est une vue en élévation plane identique à la figure 1 après un coulissement contrôlé du second élément interne par rapport au premier élément externe ;
la figure 3 est une vue en élévation plane du manchon formant le premier élément ;
la figure 4 est une vue en élévation plane du support imprimé formant le second élément ;
la figure 5 est une vue en élévation plane d'une feuille supportant des étiquettes selon l'invention ;
la figure 6 est une vue en élévation plane d'un support portant un tableau de repérage associé à un paquet de feuilles support pour étiquettes, et,
la figure 7 représente trois lignes d'une partition pourvues d'étiquettes selon l'invention.

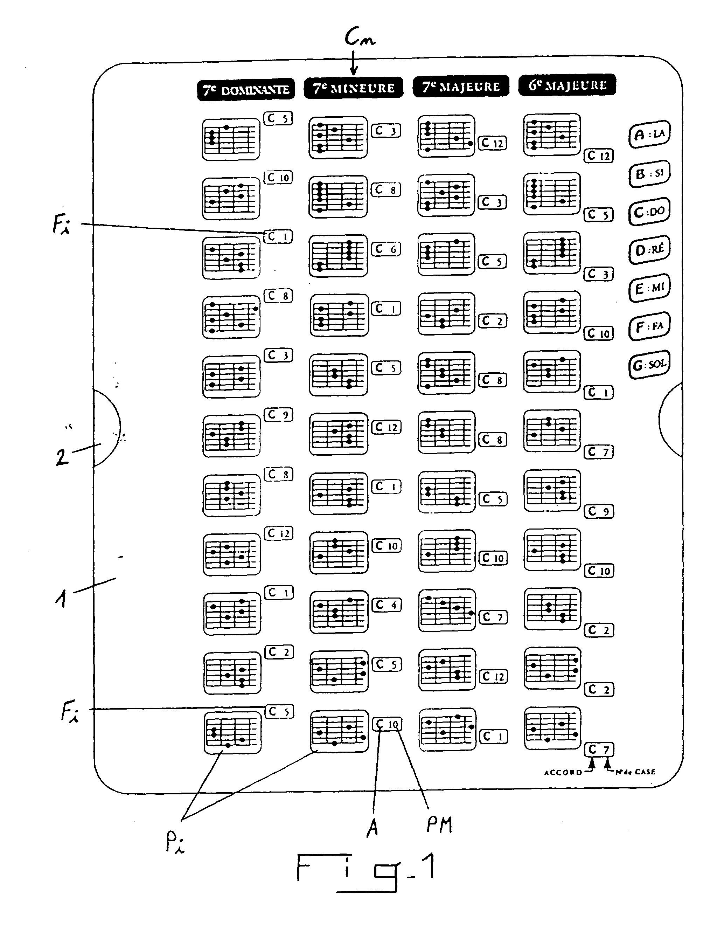

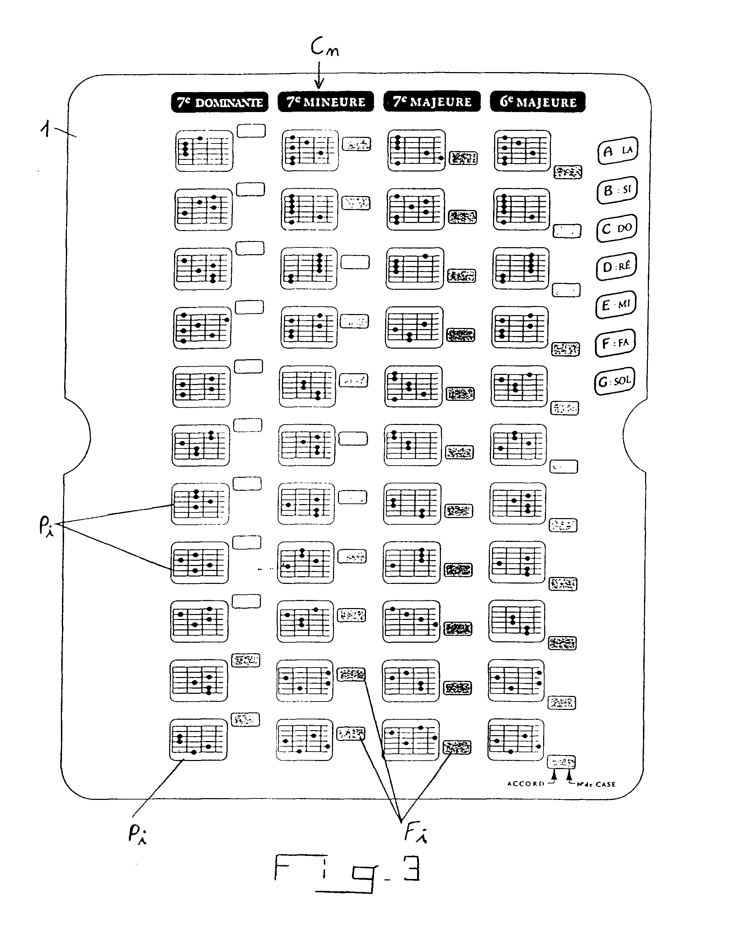

Conformément à l'invention et comme le montrent les figures 1 à 7 des dessins annexés, l'ensemble d'aide au déchiffrage et à la préparation d'une partition et à l'apprentissage et à la pratique d'un instrument polyphonique est essentiellement constitué, d'une part, par deux éléments plans 1 et 2 coopérants, dont le premier 1, extérieur et en forme de manchon plat, présente, sur l'une au moins de ses faces latérales, une série de fenêtres Fᵢ associées, chacune, à un pictogramme Pᵢ représentant, au moins schématiquement, les positions d'appui locales des doigts du joueur sur les ou une partie des organes de commande de l'instrument concerné pour la réalisation d'une note ou d'un accord donné et dont le second 2, intérieur et sous forme de support plan, peut coulisser avec guidage dans le manchon plat formant le premier élément 1 et porte, répartis sur sa surface, une pluralité d'ensembles de groupes de données A, PM composés chacun d'un accord ou d'une note A et, le cas échéant, d'un positionnement PM correspondant de la main du joueur sur l'instrument, les groupes de données A, PM d'un même ensemble étant disposés de telle manière qu'ils apparaissent tous simultanément au niveau des fenêtres Fᵢ du manchon plat 1 lorsque les deux éléments plans coopérants 1 et 2 sont situés dans une position relative adaptée, l'un par rapport à l'autre, et, d'autre part, par une pluralité d'étiquettes 3 portant, chacune, une association déterminée d'un pictogramme Pᵢ et d'un groupe de données A, PM faisant partie des associations possibles d'un pictogramme Pᵢ du premier élément 1 et d'un groupe de données A, PM du second élément 8, générées lors du coulissement relatif des deux éléments plans coopérants 1 et 2. lesdites étiquettes 3 pouvant être fixées, au moins temporairement, sur des feuilles 4 de partitions musicales ou analogues.

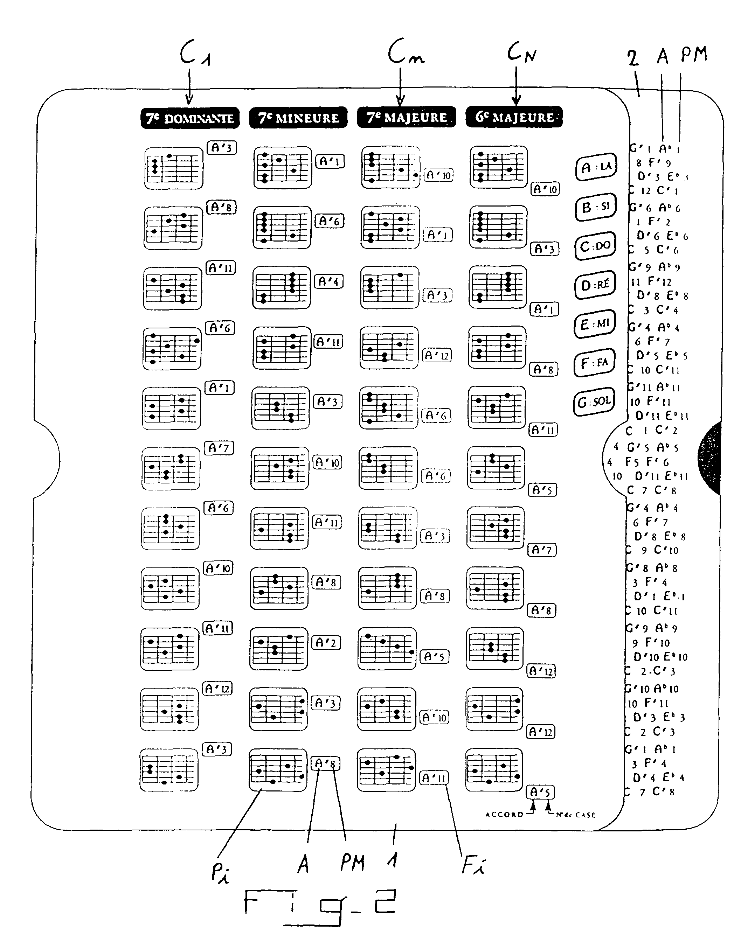

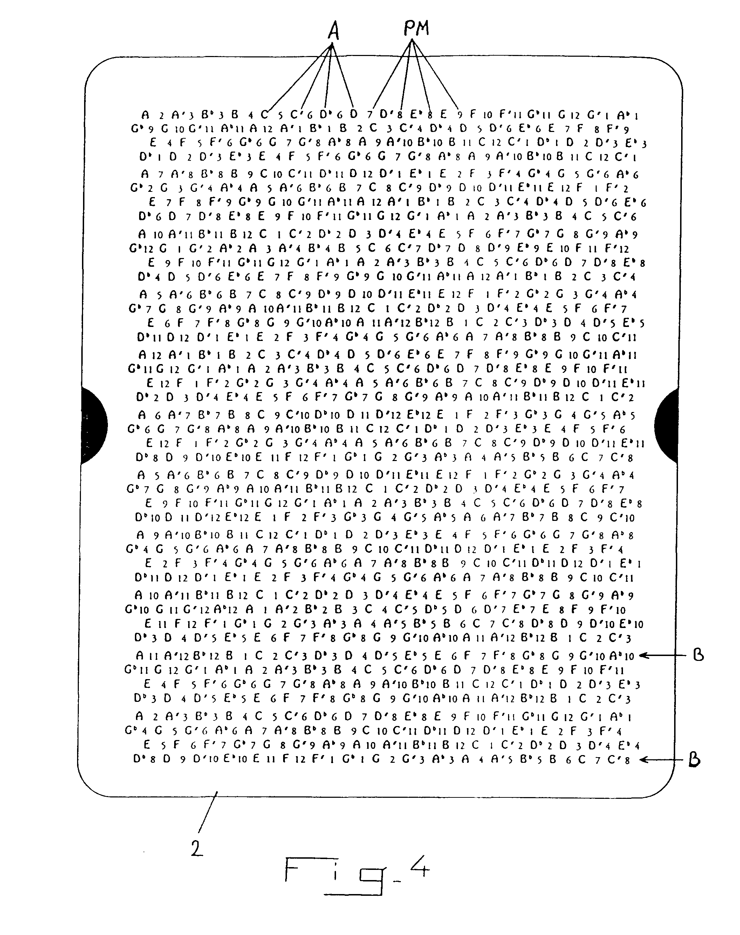

Comme le montrent les figures 1 et 2 des dessins annexés, en relation avec la figure 4 des dessins annexés, chaque ensemble de groupes de données A, PM correspond à une note de musique ou à un accord A donné(e) unique, dont la tonalité est altérée ou non.

Ainsi, la figure 1 montre un positionnement relatif des premier et second éléments 1 et 2 aboutissant à l'affichage simultané de l'ensemble des groupes de données A, PM correspondant à la note DO, au niveau des fenêtres Fᵢ, alors que la figure 2 montre un positionnement relatif aboutissant à l'affichage de l'ensemble des groupes de données A, PM correspondant à la note LA dièse.

Dans le cas d'une application à la guitare, la donnée PM pourra consister en un nombre, indiquant le numéro de la case du manche de la guitare où la main doit être positionnée pour jouer la note ou l'accord concerné(e).

La combinaison de cette donnée PM avec un pictogramme Pᵢ, représentant schématiquement une case et les points d'appui des doigts (les six traits horizontaux représentent les six cordes de la guitare), indiquent alors la position absolue et la configuration des doigts pour jouer un accord ou une note donné(e).

Chaque donnée A correspond soit à une note ou un accord non altéré(e) ou pur(e), soit altéré(e) en dièse ou encore altéré(e) en bémol.

Conformément à une caractéristique de l'invention, représentée notamment aux figures 1, 2 et 3 des dessins annexés, les pictogrammes Pᵢ portés par le manchon plat 1 et leurs fenêtres Fᵢ associées sont disposés en colonnes Cₙ s'étendant perpendiculairement à la direction de coulissement du support plan intérieur 2, chaque colonne Cₙ correspondant à un couple spécifique tonique/mode.

Selon un mode de réalisation préféré de l'invention, le manchon plat 1 comporte N colonnes Cₙ parallèles de fenêtres Fᵢ et de pictogrammes Pᵢ, constituées chacune par nombre I de fenêtres Fᵢ et de pictogrammes Pᵢ, le bord supérieur de l'ouverture de la fenêtre Fᵢ de la colonne C_{n + 1} étant situé légèrement en dessous de, ou au plus étant confondu avec, le bord inférieur de l'ouverture de la fenêtre Fᵢ de la colonne Cₙ, avec 1 ≤ i ≤ I et 1 ≤ n ≤ N - 1, et le bord supérieur de l'ouverture de la fenêtre Fᵢ de le colonne C₁ étant situé légèrement en dessous de, ou au plus étant confondu avec, le bord inférieur de la fenêtre Fᵢ₋₁ de la colonne Cₙ, avec 2 ≤ i ≤ I. Avantageusement, la surface de l'ouverture de chaque fenêtre Fᵢ est juste suffisante pour contenir et faire apparaître un unique groupe de données A, PM.

Ainsi, au cours du coulissement de l'élément interne 2 dans l'élément externe 1, chaque fenêtre Fᵢ défile le long d'une bande B longitudinale particulière du support interne 2. cette fenêtre étant la seule à permettre la lecture des groupes de données A, PM imprimés sur ladite bande B, ce groupe après groupe au cours dudit coulissement.

Par conséquent, les groupes de données A. PM portés par l'élément interne 2 sont organisés en bandes ou lignes B parallèles à la direction de coulissement dudit élément interne 2, chaque ligne ou bande de données comportant, de manière ordonnée et coordonnée avec les autres bandes ou lignes, tous les groupes de données A, PM pouvant être formés compte tenu du pictogramme Pᵢ associé à la fenêtre Fᵢ considérée et de la colonne Cₙ à laquelle appartient cette dernière.

Il résulte de la disposition précitée la possibilité d'aboutir à une très grande densité de groupes de données A, PM sur le support interne 2 (figure 4).

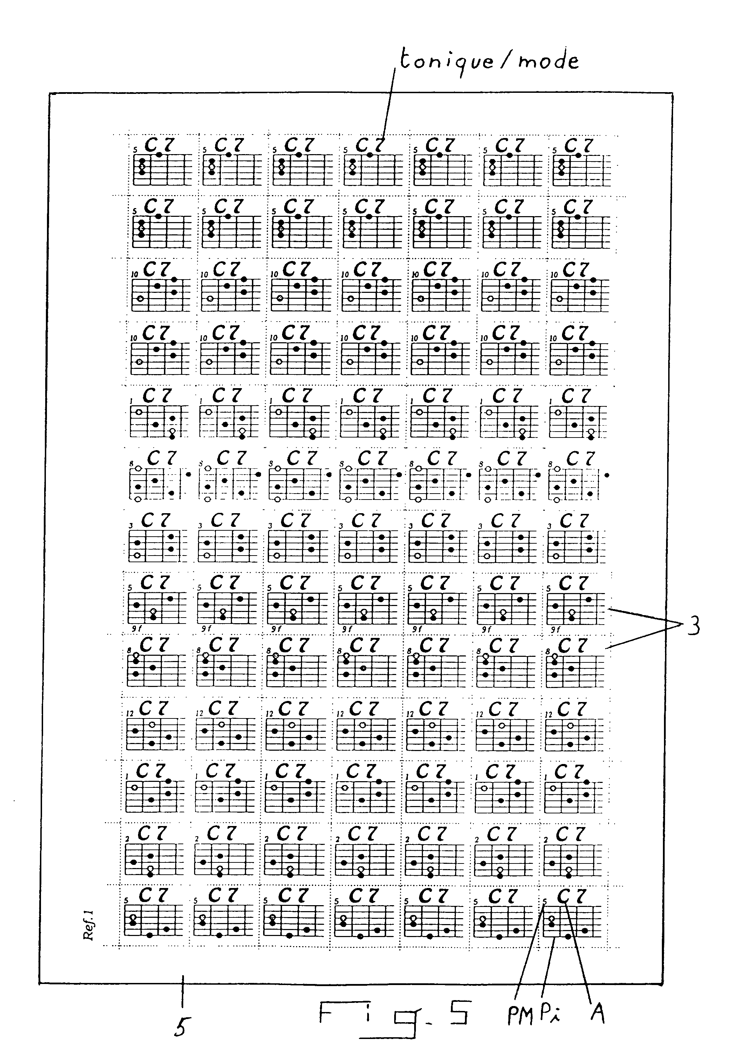

Comme le montre la figure 5 des dessins annexés, les étiquettes 3, dont chacune est présente en plusieurs exemplaires, sont regroupées, par note ou accord A, sur des feuilles ou des supports analogues 5 rassemblé(e)s dans un contenant collecteur, notamment du type classeur.

Afin de faciliter la recherche des étiquettes 3 dans le contenant collecteur, les feuilles 5 portant les étiquettes 3 sont regroupées par paquets, chaque paquet correspondant à un couple spécifique tonique/mode et renfermant les feuilles 5 correspondant aux accords ou notes A, altérée(s) ou non, à jouer selon un couple de données tonique/mode déterminé.

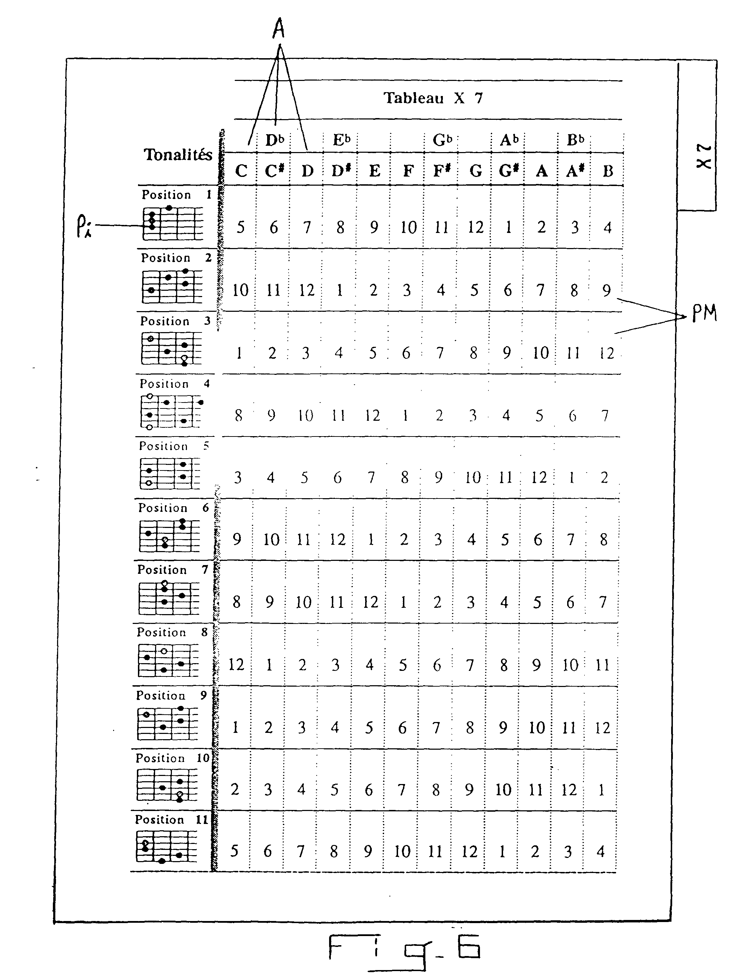

En vue d'effectuer rapidement une sélection des étiquettes 3 en fonction des différentes possibilités de positionnement de la main pour une combinaison (pictogramme Pᵢ / un accord ou une note A / couple tonique / mode) donnée, il peut être avantageusement prévu qu'à chaque paquet de feuilles 5 soit associé un tableau de repérage à deux entrées, permettant de déterminer la position PM de la main du joueur sur l'instrument de musique en fonction des positions d'appui locales des doigts de la main du joueur, telles qu'elles ressortent des pictogrammes Pᵢ, et de la note ou de l'accord A à jouer, chaque étiquette 3 portant, en outre, une information relative à la position de la main PM (figure 6).

De plus, les étiquettes 3 d'une même feuille 5 pourront également être regroupées en fonction de la donnée PM relative à la position de la main.

Selon une première variante de réalisation de l'invention, les étiquettes 3 présentent une face verso autocollante à froid, autorisant des fixations et des détachements répétés, et les feuilles support 5 sont recouvertes d'une couche anti-adhérente, telle que par exemple une couche de paraffine ou de silicone.

Selon une seconde variante de réalisation de l'invention, les étiquettes 3 peuvent comporter des moyens de fixations magnétiques, pouvant coopérer avec des moyens de fixation magnétiques complémentaires au niveau des feuilles support 5 et des feuilles de partitions ou analogues 4, ces moyens se présentant sous la forme d'un film superficiel, d'une couche intégrée ou encore de particules noyées dans la masse fibreuse.

Les étiquettes 3 pourront, par exemple, être réalisées en un papier incorporant des particules de limaille métallique magnétiquement chargée, les feuilles de partition 4 consistant en un papier incorporant de la limaille métallique neutre.

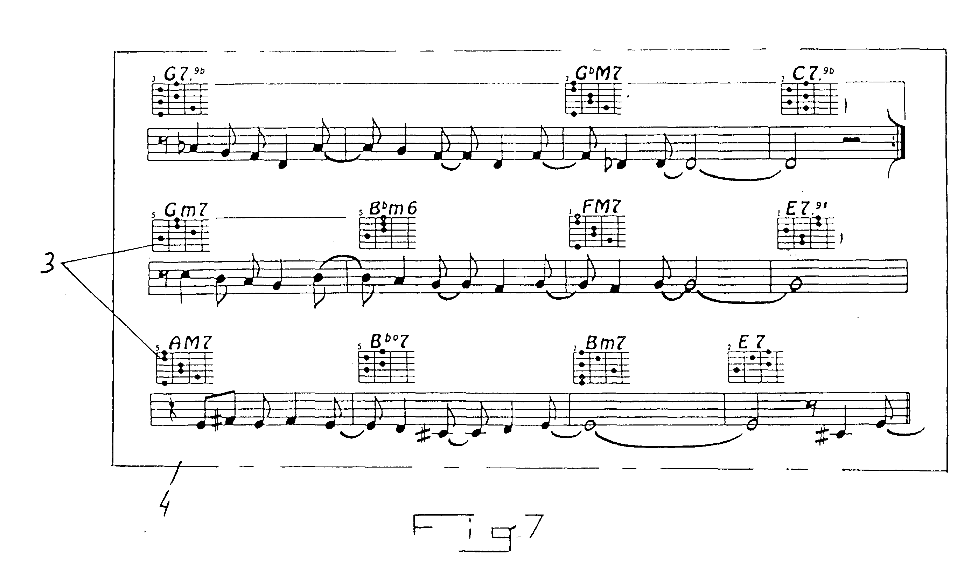

La figure 7 montre, à titre d'exemple, une partie dune page de partition sur laquelle des étiquettes 3 selon l'invention ont été appliquées.

L'invention a également pour objet un procédé de déchiffrage, de préparation et d'annotation d'une partition musicale, mettant en oeuvre l'ensemble décrit ci-dessus, caractérisé en ce qu'il consiste à lire et à identifier un accord ou une note A, ainsi que les paramètres de tonique et de mode correspondants, sur la partition 4 concernée, à effectuer un coulissement contrôlé de l'élément plat interne 2 dans le manchon externe 3 jusqu'à ce que l'accord ou la note A précité(e), ou un symbole référencé correspondant, soit visible au niveau des fenêtres Fi du manchon 1, à repérer la colonne Cn correspondant au couple tonique/mode mentionné sur la partition 4 pour l'accord ou la note A précité(e), à choisir dans cette colonne le pictogramme Pi de position des doigts et l'indication PM de la position de la main aboutissant à la manipulation la plus aisée à réaliser, notamment en fonction de l'accord ou de la note à jouer qui précède et des positions des doigts et de la main sélectionnées à cet effet et indiquées sur l'étiquette 3 apposée sur la partition 4 au niveau dudit accord ou de ladite note précédent(e), à rechercher dans le contenant collecteur et à apposer sur la partition, à proximité de l'accord ou de la note A à déchiffrer. l'étiquette 3 portant le pictogramme Pi et l'indication PM de la position de la main choisis et correspondant audit accord ou à ladite note A, associé(e) à la tonique et au mode indiqués, et à répéter les opérations précédentes jusqu'à ce que l'ensemble de la partition 4 soit déchiffré et annoté ou étiqueté.

Bien que la présente description et les dessins annexés montrent plus particulièrement une application de l'invention à un instrument à manche et à cordes, du type guitare, il est aisé pour l'homme du métier de l'appliquer sans effort particulier à tout instrument de musique polyphonique.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble pour le déchiffrage de partitions et d'aide à l'apprentissage et à la pratique d'un instrument de musique polyphonique, **caractérisé en ce qu'**il est principalement constitué, d'une part, par deux éléments plans (1 et 2) coopérants, dont le premier (1), extérieur et en forme de manchon plat, présente, sur l'une au moins de ses faces latérales, une série de fenêtres (Fᵢ) associées, chacune, à un pictogramme (Pᵢ) représentant, au moins schématiquement, les positions d'appui locales des doigts du joueur sur les ou une partie des organes de commande de l'instrument concerné pour la réalisation d'une note ou d'un accord donné et dont le second (2), intérieur et sous forme de support plan, peut coulisser avec guidage dans le manchon plat formant le premier élément (1) et porte, répartis sur sa surface, une pluralité d'ensembles de groupes de données (A, PM) composés chacun d'un accord ou d'une note (A) et, le cas échéant, d'un positionnement (PM) correspondant de la main du joueur sur l'instrument, les groupes de données (A, PM) d'un même ensemble étant disposés de telle manière qu'ils apparaissent tous simultanément au niveau des fenêtres (Fᵢ) du manchon plat (1) lorsque les deux éléments plans coopérants (1 et 2) sont situés dans une position relative adaptée, l'un par rapport à l'autre, et . d'autre part, par une pluralité d'étiquettes (3) portant, chacune, une association déterminée d'un pictogramme (Pᵢ) et d'un groupe de données (A, PM) faisant partie des associations possibles d'un pictogramme (Pᵢ) du premier élément (1) et d'un groupe de données (A, PM) du second élément (8), générées lors du coulissement relatif des deux éléments plans coopérants (1 et 2), lesdites étiquettes (3) pouvant être fixées, au moins temporairement, sur des feuilles (4) de partitions musicales ou analogues.

2. Ensemble selon la revendication 1, **caractérisé en ce que** chaque ensemble de groupes de données (A, PM) correspond à une note de musique ou à un accord (A) donné(e) unique, dont la tonalité est altérée ou non.

3. Ensemble selon l'une quelconque des revendications 1 et 2, **caractérisé en ce que** les pictogrammes (Pᵢ) portés par le manchon plat (1) et leurs fenêtres (Fᵢ) associées sont disposés en colonnes (Cₙ) s'étendant perpendiculairement à la direction de coulissement du support plan intérieur (2), chaque colonne (Cₙ) correspondant à un couple spécifique (tonique/mode).

4. Ensemble selon la revendication 3, **caractérisé en ce que** le manchon plat (1) comporte N colonnes (Cₙ) parallèles de fenêtres (Fᵢ) et de pictogrammes (Pᵢ), constituées chacune par nombre (I) de fenêtres (Fᵢ) et de pictogrammes (Pᵢ), en ce que le bord supérieur de l'ouverture de la fenêtre (Fᵢ) de la colonne (Cₙ₊₁) est situé légèrement en dessous de, ou au plus est confondu avec, le bord inférieur de l'ouverture de la fenêtre (Fᵢ) de la colonne (Cₙ), avec 1 ≤ i ≤ I et 1 ≤ n ≤ N - 1, en ce que le bord supérieur de l'ouverture de la fenêtre (Fᵢ) de le colonne (C₁) est situé légèrement en dessous de, ou au plus est confondu avec, le bord inférieur de la fenêtre (Fᵢ₋₁) de la colonne (Cₙ), avec 2 ≤ i ≤ I et en ce que la surface de l'ouverture de chaque fenêtre (Fᵢ) est juste suffisante pour contenir et faire apparaître un unique groupe de données (A, PM).

5. Ensemble selon l'une quelconque des revendications 1 à 4. **caractérisé en ce que** les étiquettes (3), dont chacune est présente en plusieurs exemplaires, sont regroupées, par note ou accord (A), sur des feuilles ou des supports analogues (5) rassemblé(e)s dans un contenant collecteur, notamment du type classeur.

6. Ensemble selon le revendication 5, **caractérisé en ce que** les feuilles (5) portant les étiquettes (3) sont regroupées par paquets, chaque paquet correspondant à un couple spécifique tonique/mode et renfermant les feuilles (5) correspondant aux accord ou notes (A), altérée(s) ou non, à jouer selon un couple de données tonique/mode déterminé.

7. Ensemble selon la revendication 6, **caractérisé en ce que** à chaque paquet de feuilles (5) est associé un tableau de repérage à deux entrées, permettant de déterminer la position (PM) de la main du joueur sur l'instrument de musique en fonction des positions d'appui locales des doigts de la main du joueur, telles qu'elles ressortent des pictogrammes (Pᵢ), et de la note ou de l'accord (A) à jouer, chaque étiquette (3) portant, en outre, une information relative à la position de la main (PM).

8. Ensemble selon l'une quelconque des revendications 1 à 7, **caractérisé en ce que** les étiquettes (3) présentent une face verso autocollante à froid, autorisant des fixations et des détachements répétés, et en ce que les feuilles support (5) sont recouvertes d'une couche anti-adhérente.

9. Ensemble selon l'une quelconque des revendications 1 à 7, **caractérisé en ce que** les étiquettes (3) comportent des moyens de fixations magnétiques, pouvant coopérer avec des moyens de fixation magnétiques complémentaires au niveau des feuilles support (5) et des feuilles de partitions ou analogues (4), ces moyens se présentant sous la forme d'un film superficiel, d'une couche intégrée ou encore de particules noyées dans la masse fibreuse.

10. Procédé de déchiffrage, de préparation et d'annotation d'une partition musicale, mettant en oeuvre l'ensemble selon l'une quelconque des revendications 1 à 9, **caractérisé en ce qu'**il consiste à lire et à identifier un accord ou une note (A), ainsi que les paramètres de tonique et de mode correspondants, sur la partition (4) concernée, à effectuer un coulissement contrôlé de l'élément plat interne (2) dans le manchon externe (3) jusqu'à ce que l'accord ou la note (A) précité(e). ou un symbole référencé correspondant, soit visible au niveau des fenêtres (Fi) du manchon (1), à repérer la colonne (Cn) correspondant au couple tonique/mode mentionné sur la partition (4) pour l'accord ou la note (A) précité(e). à choisir dans cette colonne le pictogramme (Pi) de position des doigts et l'indication (PM) de la position de la main aboutissant à la manipulation la plus aisée à réaliser, notamment en fonction de l'accord ou de la note à jouer qui précède et des positions des doigts et de la main sélectionnées à cet effet et indiquées sur l'étiquette (3) apposée sur la partition (4) au niveau dudit accord ou de ladite note précédent(e). à rechercher dans le contenant collecteur et à apposer sur la partition, à proximité de l'accord ou de la note (A) à déchiffrer. l'étiquette (3) portant le pictogramme (Pi) et l'indication (PM) de la position de la main choisis et correspondant audit accord ou à ladite note (A), associé(e) à la tonique et au mode indiqués, et à répéter les opérations précédentes jusqu'à ce que l'ensemble de la partition (4) soit déchiffré et annoté ou étiqueté.

## Patentansprüche

1. Set zum Entziffern von Partituren und zur Hilfe beim Erlernen und Spielen eines Instrumentes für mehrstimmige Musik,
**dadurch gekennzeichnet,**
**dass** es im Wesentlichen besteht aus einerseits zwei zusammenwirkenden, ebenen Teilen (1 und 2), von denen das erste (1), äußere, in Form einer flachen Hülle, auf mindestens einer seiner Seitenflächen eine Reihe von Fenstern (Fᵢ) aufweist, die jeweils zu einem Piktogramm (Pᵢ) gehören, das mindestens schematisch die Stellen des Drucks der Finger des Spielers auf die oder einen Teil der Betätigungsorgane des betreffenden Instrumentes zum Spielen einer gegebenen Note oder eines gegebenen Akkordes abbildet, und von denen das zweite (2), innere, in Form eines flachen Trägers, in der flachen Hülle, die das erste Teil (1) bildet, geführt gleiten kann und über seine Fläche verteilt eine Mehrzahl von Sätzen von Datengruppen (A, PM) trägt, die jeweils aus einem Akkord oder einer Note (A) und gegebenenfalls einer entsprechenden Stellung (PM) der Hand des Spielers auf dem Instrument bestehen, wobei die Daten (A, PM) eines und desselben Satzes derart angeordnet sind, dass sie alle gleichzeitig in Höhe der Fenster (Fᵢ) der flachen Hülle (1) erscheinen, wenn die beiden zusammenwirkenden flachen Teile (1 und 2) sich in einer geeigneten Stellung relativ zueinander befinden, und andererseits aus einer Vielzahl von Etiketten (3), die jeweils eine bestimmte Kombination eines Piktogramms (Pᵢ) mit einer Datengruppe (A, PM) tragen, die zu den möglichen Kombinationen eines Piktogramms (Pᵢ) des ersten Teils (1) mit einer Datengruppe (A, PM) des zweiten Teils (2) gehören, die beim Verschieben der beiden zusammenwirkenden flachen Teile (1 und 2) relativ zueinander entstehen, wobei die genannten Etiketten (3) mindestens vorübergehend auf Blättern (4) musikalischer Partituren oder Ähnlichem befestigt werden können.

2. Set nach Anspruch 1,
**dadurch gekennzeichnet,**
**dass** jede Einheit von Datengruppen (A, PM) einer einzigen musikalischen Note oder einem einzigen Akkord entspricht, deren Tonart alteriert ist oder nicht.

3. Set nach einem der Ansprüche 1 und 2,
**dadurch gekennzeichnet,**
**dass** die Piktogramme (Pᵢ) auf der flachen Hülle (1) und ihre zugehörigen Fenster (Fᵢ) in Spalten (Cₙ) angeordnet sind, die senkrecht zur Verschiebungsrichtung des flachen inneren Trägers (2) verlaufen, wobei jede Spalte (Cₙ) einer bestimmten Zuordnung Tonika/Tongeschlecht entspricht.

4. Set nach Anspruch 3,
**dadurch gekennzeichnet,**
**dass** die flache Hülle (1) N parallele Spalten (Cₙ) von Fenstern (Fᵢ) und Piktogrammen (Pᵢ) aufweist, jeweils bestehend aus einer Zahl (l) von Fenstern (Fᵢ) und Piktogrammen (Pᵢ), dadurch, dass der obere Rand der Öffnung des Fensters (Fᵢ) der Spalte (Cₙ₊₁) sich geringfügig unter dem unteren Rand der Öffnung des Fensters (Fᵢ) der Spalte (Cₙ) befindet oder höchstens mit diesem zusammenfällt, wobei 1 ≤ i ≤ l und 1 ≤ n ≤ N-1, dadurch, dass der obere Rand der Öffnung des Fensters (Fᵢ) der Spalte (Cₗ) sich geringfügig unter dem unteren Rand der Öffnung des Fensters (Fᵢ₋₁) der Spalte (Cₙ) befindet oder höchstens mit diesem zusammenfällt, wobei 2 ≤ i ≤ I, und dadurch, dass die Fläche der Öffnung jedes Fensters (Fᵢ) gerade ausreichend ist, um eine einzige Datengruppe (A, PM) zu enthalten und erscheinen zu lassen.

5. Set nach einem der Ansprüche 1 bis 4,
**dadurch gekennzeichnet,**
**dass** die Etiketten (3), von denen jede in mehreren Exemplaren vorliegt, nach Note oder Akkord (A) auf Blättern oder ähnlichen Trägern (5) gruppiert sind, die in einem Sammelbehälter insbesondere der Art eines Ordners vereinigt sind.

6. Set nach Anspruch 5,
**dadurch gekennzeichnet,**
**dass** die Blätter (5), die die Etiketten (3) tragen, in Paketen gruppiert sind, wobei jedes Paket einer bestimmten Zuordnung Tonika/Tongeschlecht entspricht und Blätter (5) umfasst, die den Akkorden oder Noten (A), alteriert oder nicht, entsprechen, die nach einer bestimmten Zuordnung Tonika/Tonart zu spielen sind.

7. Set nach Anspruch 6,
**dadurch gekennzeichnet,**
**dass** zu jedem Paket von Blättern (5) eine Bestimmungstabelle mit zwei Parametern gehört, die die Stellung (PM) der Hand des Spielers auf dem Musikinstrument in Abhängigkeit von den Stellen des Druckes der Finger der Hand des Spielers, wie sie aus den Piktogrammen (Pᵢ) hervorgehen, und der zu spielenden Note oder des zu spielenden Akkordes (A) zu bestimmen erlaubt, wobei jedes Etikett (3) außerdem eine Information über die Stellung der Hand (PM) trägt.

8. Set nach einem der Ansprüche 1 bis 7,
**dadurch gekennzeichnet,**
**dass** die Etiketten (3) eine kalt selbstklebende Rückseite aufweisen, die wiederholte Befestigungen und Abnahmen erlaubt, und dadurch, dass die Trägerblätter (5) mit einer Trennmittelschicht bedeckt sind.

9. Set nach einem der Ansprüche 1 bis 7,
**dadurch gekennzeichnet,**
**dass** die Etiketten (3) magnetische Befestigungsmittel aufweisen, die mit komplementären magnetischen Befestigungsmitteln an den Trägerblättern (5) und den Partiturblättern oder Ähnlichem (4) zusammenarbeiten können, wobei diese Mittel die Form eines Oberflächenfilmes haben, einer eingearbeiteten Schicht oder auch von Teilchen, die in die Fasermasse eingebettet sind.

10. Verfahren zum Entziffern, Vorbereiten und Erläutern einer musikalischen Partitur, das das Set nach einem der Ansprüche 1 bis 9 anwendet,
**dadurch gekennzeichnet,**
**dass** es darin besteht, eine Note oder einen Akkord (A), sowie die entsprechenden Parameter Tonika und Tongeschlecht in der betreffenden Partitur (4) zu lesen und zu bestimmen, das flache Innenteil (2) in der Außenhülle (3) kontrolliert zu verschieben, bis der genannte Akkord oder die genannte Note (A) oder ein entsprechendes Symbol in den Fenstern (F;) der Hülle (1) erscheint, die Spalte (Cn) zu bestimmen, die der auf der Partitur (4) erwähnten Zuordnung Tonika/Tongeschlecht für den genannten Akkord oder die genannte Note (A) entspricht, in dieser Spalte das Piktogramm (Pᵢ) des Fingersatzes und die Angabe (PM) der Handstellung zu wählen, die die bequemste Ausführung ermöglicht, insbesondere in Abhängigkeit vom vorangehenden zu spielenden Akkord oder der vorangehenden zu spielenden Note und der hierzu gewählten Finger- und Handstellung, die auf dem Etikett (3) angegeben ist, das auf der Partiur (4) nahe dem genannten vorangehenden Akkord oder der vorangehenden Note angebracht wurde, das Etikett (3), das das ausgewählte Piktogramm (Pi) und die Angabe (PM) der ausgewählten Handstellung trägt und dem genannten Akkord oder der genannten Note (A) entspricht und zur angegebenen Tonika und Tongeschlecht gehört, dem Sammelbehälter zu entnehmen und auf der Partitur nahe dem zu entziffernden Akkord oder der zu entziffernden Note (A) anzubringen und die vorangehenden Schritte zu wiederholen, bis die gesamte Partitur (4) entziffert und erläutert oder etikettiert ist.

## Claims

1. Assembly for deciphering a score and a teaching aid for learning and practising the playing of a polyphonic musical instrument, **characterised in that** it consists mainly, on the one hand, of two cooperating plane elements (1 and 2), the external first element (1) in the form of a flat sleeve having, on at least one of its lateral faces, a row of windows (Fᵢ) each associated with a pictogram (Pᵢ) representing, at least schematically, the local positions for support of the player's fingers on the control members or a portion of the control members of the instrument concerned for producing a note or a given chord and the internal second element (2) in the form of a plane support being able to slide with guidance in the flat sleeve forming the first element (1) and having distributed over its surface a plurality of assemblies of groups of data (A, PM) each composed of a chord or a note (A) and, if applicable, a corresponding positioning (PM) of the player's hand on the instrument, the groups of data (A, PM) of a same assembly being disposed in such a way that they all appear simultaneously in the region of the windows (Fᵢ) of the flat sleeve (1) when the two cooperating plane elements (1 and 2) are located in a mutually adapted relative position and, on the other hand, of a plurality of labels (3) each carrying a defined association between a pictogram (Pᵢ) and a group of data (A, PM) forming part of the possible associations of a pictogram (Pᵢ) of the first element (1) and of a group of data (A, PM) of the second element (8), generated during the relative sliding of the two cooperating plane elements (1 and 2) said labels (3) being adapted to be fixed at least temporarily on sheets (4) of musical scores or the like.

2. Assembly according to claim 1, **characterised in that** each assembly of groups of data (A, PM) corresponds to a musical note or to a single given chord (A) of which the tonality is or is not altered.

3. Assembly according to any one of claims 1 and 2, **characterised in that** the pictograms (Pᵢ) carried by the flat sleeve (1) and their associated windows (Fᵢ) are disposed in columns (Cₙ) extending perpendicularly to the direction of sliding of the internal plane support (2), each column (Cₙ) corresponding to a specific couple (tonic/mode).

4. Assembly according to claim 3, **characterised in that** the flat sleeve (1) comprises N parallel columns (Cₙ) of windows (Fᵢ) and pictograms (Pᵢ) each consisting of a number (I) of windows (Fᵢ) and of pictograms (Pᵢ), in that the upper edge of the window (Fᵢ) aperture of the column (Cₙ₊₁) is located slightly below or at most is combined with the lower edge of the window (Fᵢ) aperture of the column (Cₙ), when 1 ≤ i ≤ 1 and 1 ≤ n ≤ N - 1, in that the upper edge of the window (Fᵢ) aperture of the column (C₁) is located slightly below or at most is combined with the lower edge of the window (Fᵢ₋₁) of the column (Cₙ) when 2 ≤ i ≤ 1 and in that the area of each window (Fᵢ) aperture is just sufficient to contain and reveal a single group of data (A, PM).

5. Assembly according to any one of claims 1 to 4, **characterised in that** the labels (3), each of which is present in a plurality of copies, are assembled by note or chord (A) on sheets or similar substrates (5) gathered in a collecting container, in particular of the folder type.

6. Assembly according to claim 5, **characterised in that** the sheets (5) carrying the labels (3) are assembled in packages, each package corresponding to a specific tonic/mode couple and containing the sheets (5) corresponding to the altered or unaltered chord or notes (A) to be played according to a defined tonic/mode data couple.

7. Assembly according to claim 6, **characterised in that** each package of sheets (5) is allocated a position finding table with two inputs, allowing the position (PM) of the player's hand on the musical instrument to be determined as a function of the local positions of support of the fingers of the player's hand as they emerge from the pictograms (Pᵢ) and of the note or the chord (A) to be played, each label (3) also carrying information relating to the position of the hand (PM).

8. Assembly according to any one of claims 1 to 7, **characterised in that** the labels (3) have a face which is self-adhesive when cold, allowing repeated fixing and detachment, and in that the substrate sheets (5) are covered with a non-adhesive layer.

9. Assembly according to any one of claims 1 to 7, **characterised in that** the labels (3) comprise magnetic fixing means capable of cooperating with complementary magnetic fixing means in the region of the substrate sheets (5) and the score sheets or the like (4), these means having the form of a surface film, an integrated layer or else particles immersed in the mass of fibres.

10. Process for deciphering, preparing and annotating a musical score employing the assembly according to any one of claims 1 to 9, **characterised in that** it consists in reading and identifying a chord or a note (A) as well as the corresponding tonic and mode parameters, on the score (4) concerned, effecting the controlled sliding of the internal flat element (2) in the external sleeve (3) until the aforementioned chord or note (A) or a corresponding reference symbol is visible in the region of the windows (Fᵢ) of the sleeve (1), marking the column (Cₙ) corresponding to the aforementioned tonic/mode couple on the score (4) for the aforementioned chord or note (A), selecting in this column the finger position pictogram (Pᵢ) and the indication (PM) of the position of the hand ending with the easiest manipulation to carry out, in particular as a function of the preceding chord or note to be played and the positions of the fingers and of the hand selected for this purpose and indicated on the label 3 attached to the score (4) in the region of said preceding chord or note, seeking, in the collecting container to be applied to the score, in the vicinity of the chord or of the note (A) to be deciphered, the label (3) carrying the selected pictogram (Pᵢ) and indication (PM) of the position of the hand and corresponding to said chord or said note (A) associated with the indicated tonic and mode, and repeating the preceding operations until the entire score (4) has been deciphered and annotated or labelled.
